# EUROPÄISCHE PATENTSCHRIFT

(11) **EP 2 739 875 B1**
(45) Veröffentlichungstag und Bekanntmachung des Hinweises auf die Patenterteilung: **14.10.2015**
(21) Anmeldenummer: 12746264.6
(22) Anmeldetag: 13.07.2012
(51) Int. Cl.: F16C 33/76, F16C 19/16, F16D 25/08

(54) **AUSRÜCKSYSTEM**
DISENGAGING SYSTEM
SYSTÈME DE DÉBRAYAGE

(30) Priorität: 05.08.2011 DE 102011080544; 07.05.2012 DE 102012207544; 14.06.2012 DE 102012209943
(43) Veröffentlichungstag der Anmeldung: 11.06.2014
(73) Patentinhaber: Schaeffler Technologies AG & Co. KG, 91074 Herzogenaurach (DE)
(72) Erfinder: SESTER, Christof, 77723 Gengenbach (DE); KRAHTOV, Luben, 76530 Baden-Baden (DE)
(86) Internationale Anmeldenummer: PCT/DE2012/000706
(87) Internationale Veröffentlichungsnummer: WO 2013/020534

(56) Entgegenhaltungen:
- DE-A1- 19 849 892
- DE-A1-102009 037 572
- DE-C1- 19 622 773
- DE-U1- 8 311 155
- FR-A1- 2 510 688
- US-A1- 2002 060 116

## Beschreibung

Die Erfindung betrifft ein Ausrücksystem zur Betätigung einer Kupplung, wobei das Ausrücksystem nach dem Oberbegriff des ersten Patentanspruchs insbesondere in der Art eines CSC (Concentric Slave Cylinder) ausgebildet ist und einen drehbaren ersten Lagerring, der mit einer Kupplung in Wirkverbindung steht und einen mit der Ausrückeinheit in Wirkverbindung stehenden drehstarren zweiten Lagerring, der mit einem Federhalteblech in Wirkverbindung steht, aufweist.

Kupplungsausrücklager beziehungsweise Kupplungseinrücklager sind häufig abgedichtet, um einen Schmutzeintrag ins Lager zu vermeiden. Gleichzeitig wird ein Lagerfettaustritt durch die Abdichtung vermieden. Bekannte Ausrücklager haben zwischen einen stehendem Lagerring und drehendem Lagerring eine berührende Dichtung und eine Labyrinthdichtung. Ein derartiges Ausrücklager ist aus DE 10 2005 053 612 A1 bekannt. Dort ist insbesondere ein CSC(Concentric-Slave-Cylinder)-Lager für eine Betätigungseinrichtung einer Schaltkupplung für Fahrzeuge mit einem Verbrennungsmotor beschrieben, das einen umlaufenden äußeren Lagerring und einen drehstarren inneren Lagerring aufweist. Zur Abdichtung des Ausrücklagers ist an beiden Lagerseiten zumindest jeweils eine mit dem umlaufenden äußeren Lagerring verbundene schleifende Dichtung und/oder eine Labyrinth- oder Spaltdichtung vorgesehen. Durch Labyrinth- oder Spaltdichtungen wird nur eine unzureichende Abdichtung des Ausrücklagers gegenüber dem Eindringen von Schmutz und von Wasser, insbesondere bei Wasserdurchfahrten oder bei auftretendem Spritzwasser, erreicht. Außerdem wird ein großer Bauraum benötigt, der für einige Anwendungen nicht zur Verfügung steht.

In einer Variante nach DE 10 2009 056 365 A1 ist der drehstarre Lagerinnenring über einen Ringflansch, eine Tellerfeder sowie ein Abstützelement federnd auf einer als CSC (Concentric-Slave-Cylinder) ausgebildeten axial verschiebbaren zentralen Ausrückeinheit abgestützt. An der von der Kupplung axial abgewandten Seite des Ausrücklagers ist ein mit dem verlängerten Bord des Lagerinnenrings drehstarr verbundenes, als Federhaltering ausgebildetes Halteelement vorgesehen. Über den Federhaltering und über in diesen eingreifende Federmittel steht der Lagerinnenring mit der CSC-Ausrückeinheit in Wirkverbindung. Dabei erzeugen die Federmittel eine axiale Vorspannung in Richtung der Kupplung. Der Federhaltering bildet ein im Schnitt stufenförmiges Profil mit zwei Ringabschnitten unterschiedlichen Durchmessers aus, die durch einen radialen Abschnitt miteinander verbunden sind. Radial außen bildet der Federhaltering einen gegenüber dem Lagerinnenring mit aufgeweitetem Durchmesser ausgeführten radial äußeren Ringabschnitt, an dem außen ein Dichtelement in Form einer Dichtlippe angeordnet ist, die an der radialen Innenseite des im Betrieb mit dem Lageraußenring rotie-renden Endabschnitts angelegt ist. Diese Dichtlippe bietet eine nur ungenügende Abdichtung.

Die DE 83 11 155 U1 offenbart ein Ausrücksystem zur Betätigung einer Kupplung gemäß den Merkmalen des Oberbegriffs des Patentanspruchs 1.

Aufgabe der Erfindung ist es, ein Ausrücksystem zur Betätigung einer Kupplung zu entwickeln, wobei das Ausrücksystem insbesondere in der Art eines CSC (Concentric Slave Cylinder) ausgebildet ist und eine zuverlässige Abdichtung mit geringem Bauraumbedarf aufweist.

Diese Aufgabe wird durch die kennzeichnenden Merkmale des ersten Patentanspruchs gelöst.

Vorteilhafte Ausgestaltungen ergeben sich aus den Unteransprüchen.

Das Ausrücksystem wird für die Betätigung einer Kupplung im Antriebsstrang eines Kraftfahrzeugs eingesetzt, und weist einen drehbaren ersten Lagerring, der mit einer Kupplung in Wirkverbindung steht und einem mit der Ausrückeinheit in Wirkverbindung stehenden drehstarren zweiten Lagerring auf, der mit einem Federhalteblech in Wirkverbindung steht, wobei das Federhalteblech erfindungsgemäß an dem drehstarren zweiten Lagerring befestigt ist und das Federhalteblech die Funktion einer zweiten Dichtungsanordnung, insbesondere die Funktion einer Labyrinthdichtung, übernimmt. Dadurch ist es möglich, Bauraum einzusparen und die Kosten zu senken, da keine separate Labyrinthdichtung mehr erforderlich ist. Weiterhin wird der Montageaufwand reduziert. Der drehfeste zweite Lagerring bildet den Lageraußenring und weist einen radial nach innen gerichteten Flansch auf, an dessen Innendurchmesser das Federhalteblech kraftschlüssig und/oder formschlüssig befestigt ist.

Dabei ist das Federhalteblech insbesondere so ausgelegt ist, dass eine darauf wirkende Feder in Kraftrichtung der Kupplung oder entgegen der Kupplungskraft wirkt.

Bevorzugt wird das Federhalteblech in einen Innendurchmesser des zweiten Lagerrings drehfest eingepresst. Dazu weist das Federhalteblech über seinen an den zweiten Lagerring angrenzenden Umfang Elemente auf, die in den Innendurchmesser des zweiten Lagerrings einpressbar sind.

Weiterhin kann das Federhalteblech durch Formschluss an dem zweiten Lagerring drehfest befestigt sein. Auf jeden Fall sollte gewährleistet werden, dass eine Verdrehung des Federhalteblechs durch das anliegende Schleppmoment vermieden wird.

Eine vorteilhafte Ausgestaltung besteht weiterhin darin, dass das Federhalteblech am zweiten Lagerring zusätzlich axial fixiert ist.

Dazu sind am Federhalteblech beispielsweise radial nach außen weisende Widerhaken vorhanden, die am zweiten Lagerring anliegen und dadurch eine axiale Fixierung des Feder-haltebleches gewährleisten.

An dem nach außen weisenden Bereich des Flansches liegen die das Federhalteblech axial fixierenden Widerhaken an.

Die Erfindung stellt dadurch, dass das Federhalteblech die Funktion einer Labyrinthdichtung übernimmt, insgesamt eine einfache, kostengünstige und praktikable Lösung der Abdichtung zur Verfügung.

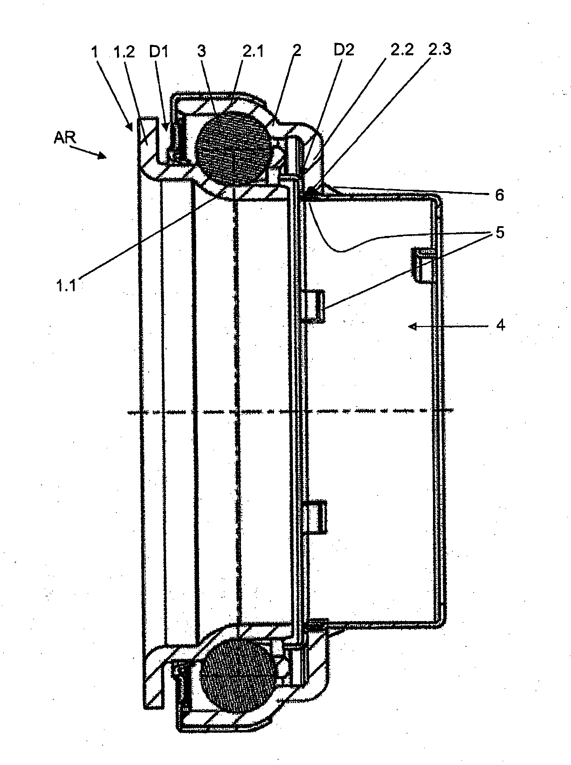

Die Erfindung wird nachfolgend anhand eines Ausführungsbeispiels und zugehöriger Zeichnung (Figur 1) näher erläutert.

In Figur 1 ist der Längsschnitt durch ein Ausrücksystem AR für eine Kupplung im Antriebsstrang eines Kraftfahrzeuges dargestellt, welches für eine Ausrückeinheit in Form eines CSC-(Concentric Slave Cylinder) Anwendung findet. Das Ausrücksystem AR weist einen drehbaren ersten Lagerring 1 auf, der mit einer nicht dargestellten Kupplung in Wirkverbindung steht. Weiterhin ist ein drehstarrer zweiter Lagerring 2 vorhanden. Zwischen dem inneren Lager-board 1.1 des ersten Lagerrings 1 und dem äußeren Lagerboard 2.1 des zweiten Lagerrings 2 sind Wälzkörper 3 in Form von Kugeln angeordnet. Der erste Lagerring 1 weist ausgehend von seinem Lagerboard 1.1 einen radial nach außen gerichteten Flansch 1.2 auf. Zwischen dem Flansch 1.2 und dem darauf zuweisenden Ende des äußeren Lagerboards 2.1 ist eine erste Dichtungsanordnung D1 vorgesehen. Der drehfeste zweite Lagerring 2 weist an dem der ersten Dichtungsanordnung D1 abgewandten Ende eine radial nach innen abgewinkelte Schulter 2.2 mit einem Innendurchmesser 2.3 auf. In den Innendurchmesser 2.3 der Schulter 2.2 des drehstarren zweiten Lagerrings 2 ist ein Federhalteblech 4 mit vorgeprägten radial nach außen gerichteten Noppen 5 drehfest eingepresst, so dass eine Verdrehung durch das anliegende Schleppmoment nicht vorkommen kann. Das Federhalteblech 4 übernimmt die Funktion einer zweiten Dichtungsanordnung D2 in der Art einer Labyrinthdichtung, die zum Innenraum des Ausrücksystems AR abdichtet.

Die Sicherung des Federhaltebleches 4 in axialer Richtung erfolgt mit radial nach außen gebogenen Widerhacken 6 des Federhaltebleches 4, wobei die nach außen weisenden Enden der Widerhaken 6 an der Schulter 2.2 des zweiten Lagerrings 2anliegen.

Über das Federhalteblech 4 und über in diesen eingreifende Federmittel steht der zweite Lagerring 2 mit der nicht dargestellten CSC-Ausrückeinheit in Wirkverbindung. Dabei erzeugen die nicht dargestellten Federmittel eine axiale Vorspannung in Richtung der ebenfalls nicht dargestellten Kupplung.

Durch das Zusammenfassen der Funktionen von Federhalteblech und Labyrinthdichtung zu einem Bauteil kann Bauraum eingespart werden. Weitere Vorteile sind durch niedrigere Kosten und einen geringeren Montageaufwand zu verzeichnen.

### Bezugszeichenliste

- 1: erster Lagerring
- 1.1: innerer Lagerboard des ersten Lagerrings 1
- 1.2: Flansch
- 2: zweiter Lagerring
- 2.1: äußerer Lagerboard des zweiten Lagerrings 2
- 2.2: Schulter
- 2.3: Innendurchmesser der Schulter 2.2
- 3: Wälzkörper
- 4: Federhalteblech
- 5: Noppen
- 6: Widerhaken
- AR: Ausrücklager
- D1: erste Dichtungsanordnung
- D2: zweite Dichtungsanordnung

## Patentansprüche

1. Ausrücksystem zur Betätigung einer Kupplung, wobei das Ausrücksystem (AR) insbesondere in der Art eines CSC (Concentric Slave Cylinder) ausgebildet ist und einen drehbaren ersten Lagerring (1), der mit einer Kupplung in Wirkverbindung steht und einem mit einer Ausrückeinheit in Wirkverbindung stehenden drehstarren zweiten Lagerring (2), der mit einem Federhalteblech (4) in Wirkverbindung steht aufweist, wobei das an dem drehstarren zweiten Lagerring (2) befestigte Federhalteblech (4) die Funktion einer Dichtungsanordnung (D2) übernimmt, **gekennzeichnet dadurch, dass** der zweite Lagerring (2) den Lageraußenring bildet und eine radial nach innen weisende umlaufende Schulter (2.2) aufweist, an deren Innendurchmesser (2.3) das Federhalteblech (4) befestigt ist.

2. Ausrücksystem Ausrücklager nach Anspruch 1, **dadurch gekennzeichnet, dass** das Federhalteblech (4) eine Dichtungsanordnung (D2) in Form einer Labyrinthdichtung übernimmt.

3. Ausrücksystem nach Anspruch 1 oder 2, **dadurch gekennzeichnet, dass** das Federhalteblech (4) so ausgelegt ist, dass eine darauf wirkende Feder in Kraftrichtung der Kupplung oder entgegen der Kupplungskraft wirkt.

4. Ausrücksystem nach einem der Ansprüche 1 bis 3, **dadurch gekennzeichnet, dass** das Federhalteblech (4) in einen Innendurchmesser des zweiten Lagerrings (2) eingepresst ist.

5. Ausrücksystem nach Anspruch 4, **dadurch gekennzeichnet, dass** das Federhalteblech (4) über seinen an den zweiten Lagerring (2) angrenzenden Umfang Elemente aufweist, die in den Innendurchmesser des zweiten Lagerrings (2) drehfest eingepresst sind.

6. Ausrücksystem nach einem der Ansprüche 1 bis 5, **dadurch gekennzeichnet, dass** das Federhalteblech (4) durch Formschluss an dem zweiten Lagerring (2) drehfest befestigt ist.

7. Ausrücksystem nach einem der Ansprüche 1 bis 6, **dadurch gekennzeichnet, dass** das Federhalteblech (4) am zweiten Lagerring (2) axial fixiert ist.

8. Ausrücksystem nach Anspruch 7" **dadurch gekennzeichnet, dass** das Federhalteblech Widerhaken (6) aufweist, die es axial am Federhalteblech (4) fixieren, wobei die Widerhaken (6) am zweiten Lagerring (2) anliegen

9. Ausrücksystem nacheinem der vorangehenden Ansprüche, **dadurch gekennzeichnet**, das an dem nach außen weisenden Bereich der Schulter (2.2) die das Federhalteblech (4) axial fixierenden Widerhaken (6) anliegen.

## Claims

1. Disengaging system for actuating a clutch, the disengaging system (AR) being configured, in particular, in the manner of a CSC (concentric slave cylinder) and having a rotatable first bearing ring (1) which is operatively connected to a clutch, and a rotationally locked second bearing ring (2) which is operatively connected to a disengaging unit and to a spring holding plate (4), the spring holding plate (4) which is fastened to the rotationally locked second bearing ring (2) assuming the function of a seal arrangement (D2), **characterized in that** the second bearing ring (2) forms the bearing outer ring and has a radially inwardly pointing circumferential shoulder (2.2), to the inner diameter (2.3) of which the spring holding plate (4) is fastened.

2. Disengaging system according to Claim 1, **characterized in that** the spring holding plate (4) takes over the function of a seal arrangement (D2) in the form of a labyrinth seal.

3. Disengaging system according to Claim 1 or 2, **characterized in that** the spring holding plate (4) is designed in such a way that a spring which acts on it acts in the force direction of the clutch or counter to the clutch force.

4. Disengaging system according to one of Claims 1 to 3, **characterized in that** the spring holding plate (4) is pressed into an inner diameter of the second bearing ring (2).

5. Disengaging system according to Claim 4, **characterized in that** the spring holding plate (4) has elements over its circumference which adjoins the second bearing ring (2), which elements are pressed in a torque-proof manner into the inner diameter of the second bearing ring (2).

6. Disengaging system according to one of Claims 1 to 5, **characterized in that** the spring holding plate (4) is fastened in a torque-proof manner to the second bearing ring (2) by way of a positively locking connection.

7. Disengaging system according to one of Claims 1 to 6, **characterized in that** the spring holding plate (4) is fixed axially on the second bearing ring (2).

8. Disengaging system according to Claim 7, **characterized in that** the spring holding plate has barbs (6) which fix it axially on the spring holding plate (4), the barbs (6) bearing against the second bearing ring (2).

9. Disengaging system according to one of the preceding claims, **characterized in that** the barbs (6) which axially fix the spring holding plate (4) bear against the outwardly pointing region of the shoulder (2.2).

## Revendications

1. Système de débrayage pour l'actionnement d'un embrayage, le système de débrayage (AR) étant en particulier réalisé à la manière d'un CSC (concentric slave cylinder - cylindre récepteur concentrique) et comprenant une première bague de palier (1) rotative qui est en liaison fonctionnelle avec un embrayage et une deuxième bague de palier (2) bloquée en rotation et en liaison fonctionnelle avec une unité de débrayage, laquelle deuxième bague de palier est en liaison fonctionnelle avec une tôle de retenue de ressort (4), la tôle de retenue de ressort (4) fixée à la deuxième bague de palier (2) bloquée en rotation assurant la fonction d'un ensemble d'étanchéité (D2), **caractérisé en ce que** la deuxième bague de palier (2) forme la bague extérieure de palier et comprend un épaulement (2.2) périphérique tourné radialement vers l'intérieur, au niveau du diamètre intérieur (2.3) duquel la tôle de retenue de ressort (4) est fixée.

2. Système de débrayage selon la revendication 1, **caractérisé en ce que** la tôle de retenue de ressort (4) assure la fonction d'un ensemble d'étanchéité (D2) sous la forme d'un joint d'étanchéité à labyrinthe.

3. Système de débrayage selon la revendication 1 ou 2, **caractérisé en ce que** la tôle de retenue de ressort (4) est conçue de telle sorte qu'un ressort agissant sur celle-ci agisse dans la direction de force de l'embrayage ou en sens contraire à la force d'embrayage.

4. Système de débrayage selon l'une quelconque des revendications 1 à 3, **caractérisé en ce que** la tôle de retenue de ressort (4) est enfoncée dans un diamètre intérieur de la deuxième bague de palier (2).

5. Système de débrayage selon la revendication 4, **caractérisé en ce que** la tôle de retenue de ressort (4) comprend des éléments sur sa périphérie adjacente à la deuxième bague de palier (2), lesquels éléments sont enfoncés de manière bloquée en rotation dans le diamètre intérieur de la deuxième bague de palier (2).

6. Système de débrayage selon l'une quelconque des revendications 1 à 5, **caractérisé en ce que** la tôle de retenue de ressort (4) est fixée de manière bloquée en rotation par engagement par complémentarité de 'formes à la deuxième bague de palier (2).

7. Système de débrayage selon l'une quelconque des revendications 1 à 6, **caractérisé en ce que** la tôle de retenue de ressort (4) est fixée axialement à la deuxième bague de palier (2).

8. Système de débrayage selon la revendication 7, **caractérisé en ce que** la tôle de retenue de ressort comprend des crochets (6) qui le fixent axialement à la tôle de retenue de ressort (4), les crochets (6) s'appliquant contre la deuxième bague de palier (2).

9. Système de débrayage selon l'une quelconque des revendications précédentes, **caractérisé en ce que** les crochets (6) fixant axialement la tôle de retenue de ressort (4) s'appliquent contre la région tournée vers l'extérieur de l'épaulement (2.2).
